# EUROPEAN PATENT APPLICATION

(11) **EP 4 439 356 A1**
(43) Date of publication of application: **02.10.2024**
(21) Application number: 23275051.3
(22) Date of filing: 31.03.2023
(51) Int. Cl.: G06F 21/60, G06F 21/74, H04L 9/08, G06F 21/76

(54) **FPGA AND MICROARCHITECTURE ATTACKS**

(71) Applicant: nCipher Security Limited, Cambridge CB1 2GA (GB)
(72) Inventor: CARTER, Jonathan Richard Edward, Cambridge (GB); BAKER, Kevin John, Cambridge (GB)
(74) Representative: Marks & Clerk LLP

(57) **Abstract**

A Hardware Security Module is proposed which comprises a Field Programmable Gate Array (FPGA). In use, the FPGA is configured to provide a soft-core processor for executing program code. This makes possible changes in the configuration of the soft-core processor over the lifetime of the HSM based on instructions received by the FPGA. Furthermore, the use of an FPGA makes it possible to have a different configuration at times when the HSM is used by different corresponding users (tenants). Furthermore, the use of an FPGA makes it cheaper to have a different configuration for different instances of the HSM.

## Description

### Field

The present invention relates to a cryptographic device

### Background

Various devices may be used to perform cryptographic algorithms. A Hardware Security Module (HSM) is a system that securely stores and manages cryptographic keys, and performs a set of cryptographic algorithms. An example Hardware Security Module (HSM) comprises a Central Processing Unit (CPU) configured to execute computer code that implements the functionality of the HSM (e.g. generates, stores and manages cryptographic keys).

A Commercial Off-The-Shelf (COTS) processor is a processor that has been designed and manufactured by a third party vendor. Using a Commercial Off-The-Shelf (COTS) processor can speed up development and be more cost efficient compared to designing a bespoke processor specifically for a task at hand. Example vendors of Commercial Off-The-Shelf (COTS) processors include Intel^{®}, AMD^{®} and ARM^{®}.

Processors generally implement a microarchitecture comprising the digital logic that is used to execute instructions. The microarchitecture can also define how instructions, from the processor instruction set, are implemented.

A Microarchitecture attack is when a vulnerability in the microarchitecture of the processor is exploited to compromise the security of the computational environment. Example microarchitecture attacks include "Meltdown" and "Spectre" attacks. In both these case a malicious actor obtains otherwise unavailable information by exploiting routines implemented by the processor (e.g. in the case of the "Spectre" attack - by exploiting the speculative execution mechanism used by modern processors to improve performance).

For a Hardware Security Module (HSM), the otherwise unavailable information could potentially be a user's cryptographic keys that are used to secure information. As a result, microarchitecture attacks can represent a serious vulnerability to the security of the Hardware Security Module (HSM).

Commercial Off-The-Shelf (COTS) processors are generally manufactured at scale with standard microarchitectures. As a result, with knowledge of the processor used by the Hardware Security Module (HSM) it is possible for a malicious third party to identify already-known micro-architectural vulnerabilities for the given processor and attempt to use these attacks to obtain secret information.

Furthermore, Commercial off-the-shelf (COTS) processors are generally manufactured in silicon (i.e. their design is fixed at the time of manufacture and cannot be changed). Consequently, if a micro-architectural attack is identified, and this vulnerability cannot be fixed with a software patch, then the processor (and consequently the security of the Hardware Security Module (HSM)) is potentially compromised for the rest of the HSM's life-span, possibly leading to the Hardware Security Module (HSM) being taken out of service before it otherwise would have been.

### Summary of the invention

In general terms, the present invention proposes that a Hardware Security Module comprises a Field Programmable Gate Array (FPGA). In use, the FPGA is configured to provide a control processor, such as a hard-core processor, and a soft-core processor for executing program code. The control processor is configured to obtain successive sequences of program instructions which define successive corresponding data-processing operations. The control processor either implements each operation or, if it is determined that an operation is one of a set of restricted operations, transmits a request to the soft-core processor to perform the restricted operation. The soft-core processor is configured based on instructions received by the FPGA. This makes possible changes in the configuration of the soft-core processor over the lifetime of the HSM based on instructions received by the FPGA.

For example, if a vulnerability of a current configuration of the FPGA is identified, the configuration may be changed to remove that vulnerability. Furthermore, a configuration of the FPGA may be changed at intervals, even if no specific vulnerability has been identified, to guard against a vulnerability with a current configuration which may have been identified by a malicious third party but which has not yet been noticed by the owner/provider of the HSM.

Furthermore, the use of an FPGA makes it possible for a given instance of the HSM to have different configurations for each of multiple users (tenants). That is, different tenants may be associated with different corresponding soft-core configurations, and a certain tenant uses a soft-processor having a configuration associated with that tenant. The fact that the soft-core configuration varies from one user to another means that if a malicious third party discovers a vulnerability of a configuration associated with a certain user, that vulnerability is less likely to be present in soft-core configurations associated with other users.

Furthermore, the use of an FPGA makes it cheaper to have a different configuration for different instances of the HSM. Even if the configuration of each given HSM does not change over time, the fact that it varies from one instance of the HSM to another means that if a malicious third party discovers a vulnerability of a certain configuration, that vulnerability is less likely to be present in other instances of the HSM.

### Brief Description of the Figures

Devices and methods in accordance with non-limiting embodiments will now be described with reference to the accompanying figures in which:
Fig. 1 shows a Hardware Security Module (HSM) according to an example;
Fig. 2 shows a method implemented by a Hardware Security Module (HSM) according to the example;
Fig. 3 shows an alternative Hardware Security Module (HSM);
Fig. 4 shows an implementation of a Field Programmable Gate Array (FPGA) according to Fig. 3;
Fig. 5A shows a second implementation of a Field Programmable Gate Array (FPGA) according to Fig. 3;
Fig. 5B shows a functional block diagram of functions implemented by a FPGA according to Fig. 3.
Fig. 6A shows a logical diagram of an FPGA in a HSM according to a first example embodiment;
Fig. 6B shows a method of removing a security vulnerability in a HSM according to the first example embodiment;
Fig. 7A shows a logical diagram of an FPGA in a HSM according to a second example embodiment;
Fig. 7B shows a method performed by the FPGA 700 in a HSM according to the second example embodiment;
Fig. 8A shows a logical diagram of an FPGA in a multi-tenant HSM according to a third example embodiment; and
Fig. 8B shows schematically a placement of components in a FPGA of a multi-tenant HSM according to the third example embodiment.

Throughout the figures, the same reference numerals are used to refer to the same components or functionality.

### Detailed Description

A Hardware Security Module (HSM) is a device that securely stores and manages cryptographic keys, and performs a set of cryptographic algorithms. Example cryptographic operations include, but are not limited to: generating a cryptographic key, securely storing a cryptographic key, and using cryptographic keys, for example for performing encryption or digital signature functions.

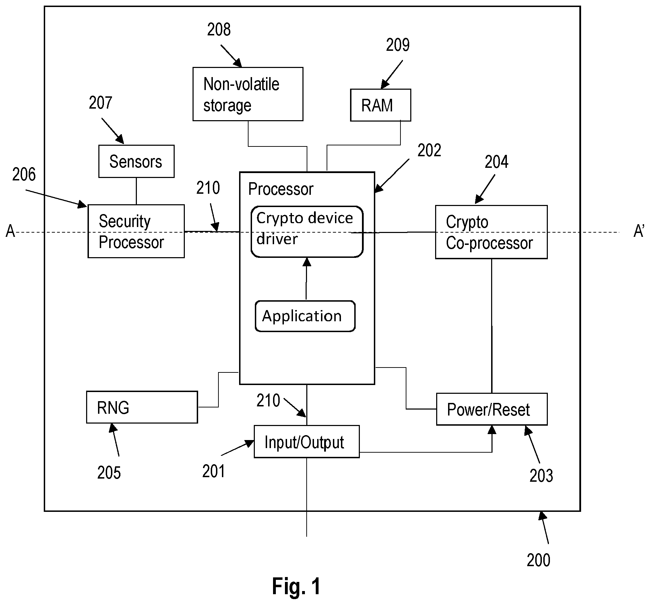

Fig. 1 is a schematic illustration showing a plan view of a Hardware Security Module (HSM) device according to an example. Fig. 1 shows a Hardware Security Module (HSM) comprising a plurality of discrete interconnected hardware components. Each of the components (discussed in more detail below) are located on a surface of a Printed Circuit Board (PCB) 200. The components may all be provided on the same surface of the PCB, although in principle different ones of the components may be on different ones of the surfaces. The PCB 200 comprises electrically conductive connections 210, also known as traces, for communicatively coupling the components to each other. The electrically conductive connections 210 may be provided on either or both major surfaces of the PCB, and/or within the structure, with electrical conductive connections transverse to the major surfaces of the PCB being provided by vias.

The Hardware Security Module (HSM) comprises an Input/Output (IO) connector 201. The IO connector 201 is communicatively coupled to a processor 202 located on the PCB 200 and is configured to act as an interface, through which data is communicated, between the processor 202 and an external system. The Hardware Security Module (HSM) is configured to be communicatively coupled to a computer or server device in an external system through the Input/Output (IO) connector 201. For example, the Hardware Security Module (HSM) can be a PCI express card (PCIe), which can be directly plugged into the computer or server device. In this case the Input/Output (IO) connector may be a PCIe connector. In use, the Hardware Security Module (HSM) receives user requests through the Input-Output (IO) connector 201. The requests may comprise commands to perform certain cryptographic operations.

The Input-Output (IO) connector 201 is communicatively coupled to the processor 202 by one of the electrically conductive connections 210. The processor 202 is a Central Processing Unit (CPU) and is configured to perform basic arithmetic, logic, controlling, and Input/Output (I/O) operations specified by instructions in computer program code. An example of the processor 202 is an NXP T1042 processor. The internal structure of the processor 202 is fixed, that is to say that the internal circuitry of the processor utilised to perform the various operations is fixed and cannot be changed after the processor 202 is manufactured. In other words, the internal structure, i.e. the hardware, of the processor 202 is not configurable.

The Hardware Security Module (HSM) further comprises non-volatile memory 208 and volatile working memory comprising Random Access Memory (RAM) 209. The non-volatile memory 208 may include any form of non-volatile device memory. In an example, the non-volatile memory 208 includes Flash memory and Electrically Erasable Read Only Memory (EEROM). The RAM 209 may be DDR RAM. The processor 202 is in wired bidirectional communication with both the non-volatile storage 208 and the Random Access Memory (RAM) 209.

Computer program code is stored in the non-volatile memory 208. When executed, a program is represented as a software product, or process, in the working memory. The processor 202 comprises logic circuitry that responds to and processes instructions in program code present in the working memory. The below description refers to an "application", which is program code comprising a set of computer instructions. The application comprises machine code stored in the non-volatile memory 208 on the HSM. Also stored in the non-volatile memory 208 on the HSM are any components necessary to execute the application, including runtime system files. When executed, a copy of the application machine code is loaded in the working memory. An "application process" is the instance of the application that is being executed, comprising the machine code in the working memory. Optionally, at least part of the non-volatile memory 208 may be provided in the form of a smart card, which is coupled to the processor 202 by a smart card reader (not shown) mounted on the PCB. In this case, the non-volatile memory 208 may comprise the combination of the smart card reader and the smart card.

The application comprises computer instructions embodying a set of one or more cryptographic algorithms. For example, the application comprises computer instructions embodying one or more of the following cryptographic algorithms: cryptographic key generation; key derivation; encryption; decryption; and digital signature algorithms (for example digital signing or validation of a digital signature). The application can be embedded in the non-volatile memory 208 of the Hardware Security Module when the Hardware Security Module (HSM) is manufactured by a trusted party, or can be provided by the trusted party as a whole or in part after manufacture. For instance, the application can be introduced by the trusted party as a computer program product, which may be in the form of a download. Alternatively, modifications to an existing application can be made by the trusted party by an update or plug-in. Execution of the application by the processor 202 causes various functionality of a Hardware Security Module (HSM), such as generating cryptographic keys, storing cryptographic keys, or performing cryptographic operations etc., to be implemented.

The processor 202 runs a board support package. This may simply be a "bare metal" system, but alternatively the processor 202 may optionally run an operating system, for example a Linux operating system. The board support package or operating system comprises system software that manages the hardware and software resources of the HSM device, and acts as an intermediary between the application and the HSM hardware.

One or more cryptographic application keys are associated with the client for use with the cryptographic algorithms embodied in the application. The application key(s) may be securely stored outside of the HSM device, encrypted using a master key. The master key is also available to the processor 202, e.g. stored within the non-volatile storage 208 and/or within a security processor (SP) 206 (described in more detail below). For example, the application key(s) may be encrypted using AES (Advanced Encryption Standard) encryption (for example) using the master key. The encrypted application key(s) can then be transmitted to a separate external device for storage. In use, encrypted application keys may be sent to the HSM, which decrypts them using the master key, and then uses the application keys to perform the cryptographic algorithms.

An example, in which material used to derive the master key is stored between the main processor 202 and the security processor 206, will now be described. In this example, the master key is derived from two keys, referred to as MK1 and MK2 using a key derivation function. The master key is derived on the processor 202 when needed to decrypt data, from MK1 and MK2.

MK2 is stored on the security processor 206 in encrypted form, and decrypted and provided to the processor 202 when requested. It is stored on the security processor 206 encrypted with a key, which may be an AES 256 bit key, referred to as SP-SEK (Security processor storage encryption key). The storage encryption key SP-SEK is used by the security processor 206 to protect sensitive data. Sensitive data, including MK2, is stored on the security processor 206 encrypted with SP-SEK. The SP-SEK is generated from a hardware random number generation component on the security processor 206. If a tamper is detected at the security processor 206, it immediately performs a hardware erasure of the SP-SEK.

MK1 is stored on the processor 202 in an encrypted form. The processor 202 stores a key, which may be a 256 bit AES key, referred to as MP-SEK (Main processor storage encryption key). The storage encryption key MP-SEK is used by the processor 202 to protect sensitive data. Sensitive data, including MK1, is stored on the processor 202 encrypted with MP-SEK. The MP-SEK is generated from a hardware random number generation component on the processor 202. If a tamper is detected at the main processor 202, it immediately performs a hardware erasure of the MP-SEK.

The MK1 and MK2 keys are used to derive the master key, which is used to encrypt the user data, such as the application keys for storage elsewhere. The master key is derived using a key derivation function taking MK1 and MK2 as input. Once the user data has been encrypted, the master key is deleted. To decrypt the user data, the master key is re-derived at the processor 202. This involves the security processor 206 decrypting MK2, and sending it to the processor 202, then decrypting MK1 at the processor 202. If a tamper is detected at the security processor 206, erasure of SP-SEK from the security processor 206 prevents the SP-SEK key from being used. This in turn prevents MK2 from being decrypted, and so prevents the master key from being derived. Similarly, erasure of the MP-SEK key at the processor 202 in response to a tamper event prevents MP-SEK from being used, and thus prevents MK1 from being decrypted, which in turn stops the master key from being derived.

The HSM device further comprises a crypto co-processor 204. The crypto co-processor 204 performs various cryptographic functions in hardware in order to accelerate the cryptographic operation, for example various standard encryption and decryption algorithms, and digital signature algorithms. For example, the crypto co-processor 204 is configured to be able to provide math acceleration to support cryptographic operations.

The crypto co-processor 204 comprises an application-specific integrated circuit (ASIC). The ASIC comprises fixed logic circuitry configured to perform the standard operations. In other words, in the crypto co-processor 204, one or more operations are implemented directly in hardware (programmable logic, rather than software). Examples of such devices include the NXP C291 Crypto Coprocessor, the NXP C292 Crypto Coprocessor, and the MaxLinear 9240 Data Compression and Security Coprocessor. In an example the crypto co-processor 204 is implemented in a self-contained package, optionally as a Flip Chip-Plastic Ball Grid Array (FC-PBGA).

The crypto co-processor 204 is configured to receive requests to perform one or more operations from the CPU 202 and to return to the CPU 202 the output of the operation. The CPU 202 is configured to off-load various operations to the crypto co-processor 204. The crypto co-processor 204 is separate to the CPU 202, and configured to perform certain operations in hardware, meaning that these operations may be performed more efficiently on the crypto co-processor 204 than on the CPU 202. Operations may be performed on the crypto co-processor 204 concurrently with operations performed on the CPU 202.

In the device shown in Fig. 1, the CPU 202 runs the application, which calls a module "Crypto device driver", which provides access to kernel cryptographic drivers, allowing the application to take advantage of the crypto co-processor 204. The crypto coprocessor 204 has fixed implementations, in other words hardware implementations, of one or more cryptographic operations. The RAM 209 keeps working data, including keys, used in these operations.

The Hardware Security Module (HSM) further comprises a Power/Reset component 203 configured to provide power to all of the active components on the Printed circuit board 200 including the processor 202 and the crypto co-processor 204. The Power/Reset component 203 may for example be coupled to the Input/Output connector 201 such that power can be provided to all active components on the PCB 200 including the processor 202 and the crypto co-processor 204 via the Input/Output connector 201. For example, the connection may be made via a PCIe (Peripheral Component Interconnect Express) line.

The Hardware Security Module (HSM) further includes a random number generator (RNG) component 205 mounted on the PCB. The Hardware Security Module may also include a power source (battery unit; not shown) mounted on the PCB.

As mentioned above, the Hardware Security Module (HSM) further comprises a security processor 206. The security processor 206 is configured to communicate with a plurality of on-board sensors 207. The sensors 207 are configured to monitor physical/environmental properties that may indicate an attack on the HSM. The sensors may include but are not limited to processor and/or board temperature sensors, or voltage and/or current sensors. The security processor 206 is configured to determine when the Hardware Security Module (HSM) is being tampered with. For example, the security processor 206 may be configured to detect a cold boot attack based on readings obtained from the temperature sensors. Furthermore, the security processor 206 may be configured to detect a glitch attack based on readings from the voltage and/or current sensors. Optionally, the Hardware Security Module (HSM) is enclosed within a container that has an access cover. In this case the sensors 207 may include a tamper detection switch, and the security processor 206 is configured to determine when the cover is removed based on the state of the tamper detection switches. Optionally, the sensors 207 may also be used for monitoring the state of the HSM, for example for detecting if one of the components, such as the CPU 202, is overheating.

In use, the security processor 206 is configured to communicate with the processor 202. The security processor 206 provides information indicating whether or not the security of the Hardware Security Module (HSM) has been compromised.

In an example, the processor 202 is configured to determine, during initialisation of the Hardware Security Module (HSM), whether the security of the HSM has been compromised. In response to receiving an indication from the security processor 206 that the HSM has been compromised, the processor 202 is configured, rather than performing a normal booting operation, to start up in an error state indicating an alarm, preventing the full functionality of the HSM from being implemented. In response to receiving an indication from the security processor 206 that the HSM has not been compromised, the processor 202 is configured to continue start up (e.g. a normal boot operation), thereby making the functionality of the HSM available for use.

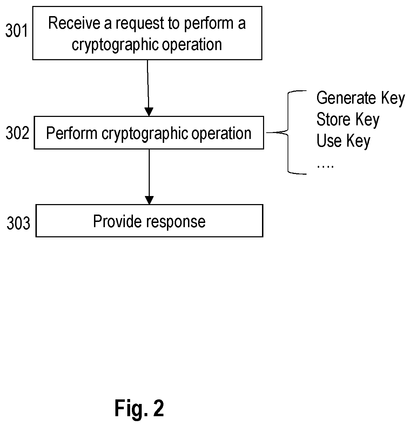

Fig. 2 shows a method implemented by a Hardware Security Module (HSM) according to the example. In step 301, the HSM receives, e.g. via the Input/Output (IO) connector 201, an instruction to perform a cryptographic operation.

The instruction is transmitted to the processor 202, which in response performs one or more cryptographic operations in step 302. This process involves a number of steps involving some or all of the components shown in Fig. 1. For example, the processor 202 may execute program instructions stored in the non-volatile memory 208, making use of the RAM 209 (and optionally an internal RAM of the processor 202, such as a CPU cache) and the crypto-processor 204. This may include using one or more master keys (which may be generated by the processor 202 following step 301, or stored in the HSM, e.g. in the security processor 206) to decrypt encrypted cryptographic keys stored in the non-volatile memory 208. The cryptographic keys may be associated with a user and be for use in executing the application stored in the non-volatile memory 208. Once the cryptographic keys are decrypted, the processor 202 may store the cryptographic keys, and then use the cryptographic keys to perform the cryptographic operations. The cryptographic operation(s) may be performed on data received via the Input/Output connector 201, e.g. in step 301 or while steps 302 is being performed.

Once these are completed, the results of the cryptographic operations may be output from the HSM, e.g. via the Input/Output (IO) connector 201.

The process of Fig. 2 may be subject to a microarchitecture attack, which is a type of side-channel attack. Side channel attacks exploit the notion that computations performed by processors often leave observable side effects beyond the processor's outputs. For example, observable side effects such as changes in power consumption, electromagnetic noise and acoustic noise can all be leveraged to extract secret information (e.g. cryptographic keys).

As discussed above, the processor 202 is susceptible to a microarchitecture attack to obtain otherwise unavailable information from the Hardware Security Module (HSM). Microarchitecture attacks leverage hardware vulnerabilities in the processor to extract sensitive information. In one example, a malicious party exploits a vulnerability in how instructions are executed by the processor 202. In particular, microarchitecture attacks can exploit vulnerabilities in cache timing, branch prediction history and/or branch target buffers to obtain the secret information.

An example of a microarchitecture attack is the "Spectre" attack. The specific details of the attack are not required to understand the concept of microarchitecture attacks. As a result, only a general discussion will be provided.

Many processors use speculative execution when executing instructions to speed up performance. In essence, speculative execution involves guessing the likely future execution direction of a program being executed by the processor and prematurely executing instructions on this path. Premature execution can be used to speed up program execution in cases where the program's flow depends on an unreachable value in external physical memory. Retrieving this value can take several hundred clock cycles. Consequently, instead of idling the processor during this time the CPU speculatively executes the predicted execution direction. If after retrieving the unreachable value from memory the execution direction was incorrect, the CPU reverts the register state back to a stored checkpoint (indicating where in the code speculative execution began), resulting in no performance improvement compared to idling the processor during this time. However, if the guess was correct the speculative execution results are committed, yielding a significant performance gain.

During the "Spectre" attack, a processor is induced to speculatively perform operations that would not occur during correct program execution. "Spectre" then exploits a vulnerability in the processor microarchitecture that the data from these operations is maintained in the CPU cache (i.e. not completely erased), making it possible for an adversary to read the cache and obtain sensitive information which it would not normally be authorised to obtain. In a Hardware Security Module (HSM), the sensitive information could be the cryptographic keys of a user, consequently microarchitecture attacks of this nature can represent a serious security vulnerability.

In the case where the processor 202 is a Commercial Off-The-Shelf (COTS) processor implemented in silicon, the design of the processor's micro-architecture may be fixed at manufacture (i.e. cannot be changed). As a result the security vulnerability may be present forever (i.e. for the whole usable life of the Hardware Security Module (HSM) comprising the processor 202). This can lead to processors and Hardware Security Modules being removed from service prematurely, increasing electrical waste and cost. In an example, the speculative execution may be initiated by an element of the CPU 201 called a branch predictor. The branch predictor cannot be modified, so a "Spectre attack" vulnerability associated with it cannot be corrected.

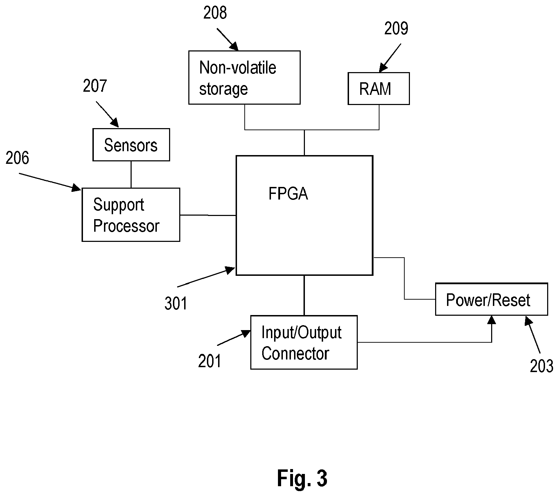

Fig. 3 shows a schematic illustration of a plan view of a Hardware Security Module (HSM). As described below a HSM as shown in Fig. 3 can be operated as an embodiment of the present disclosure. Fig. 1 uses the same reference numerals as Fig. 1 to denote the same components.

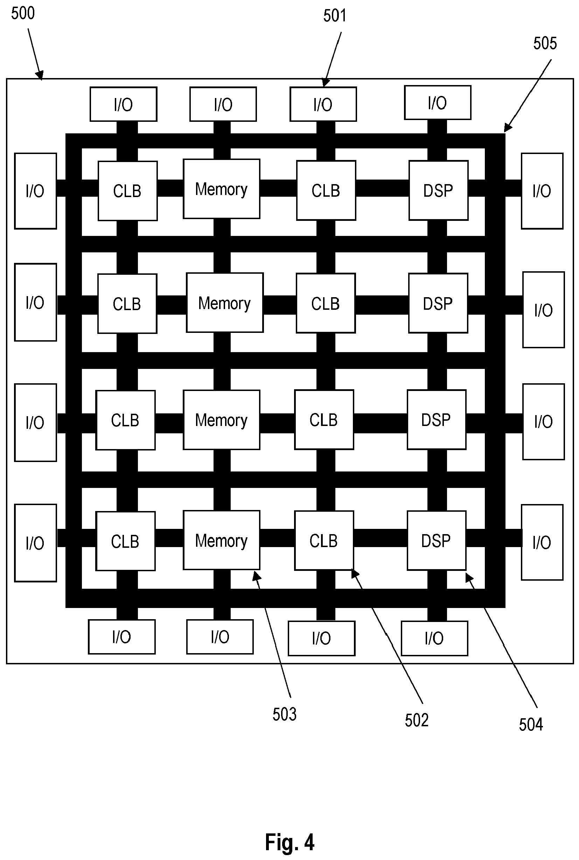

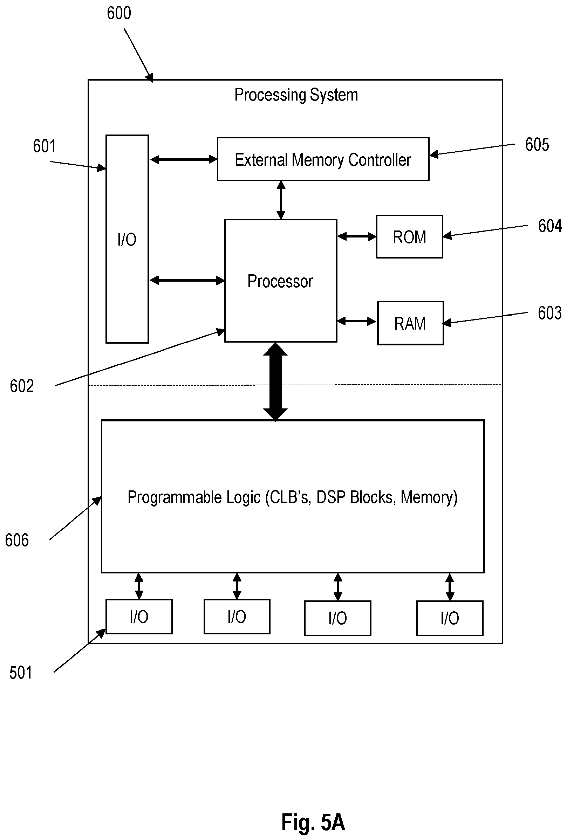

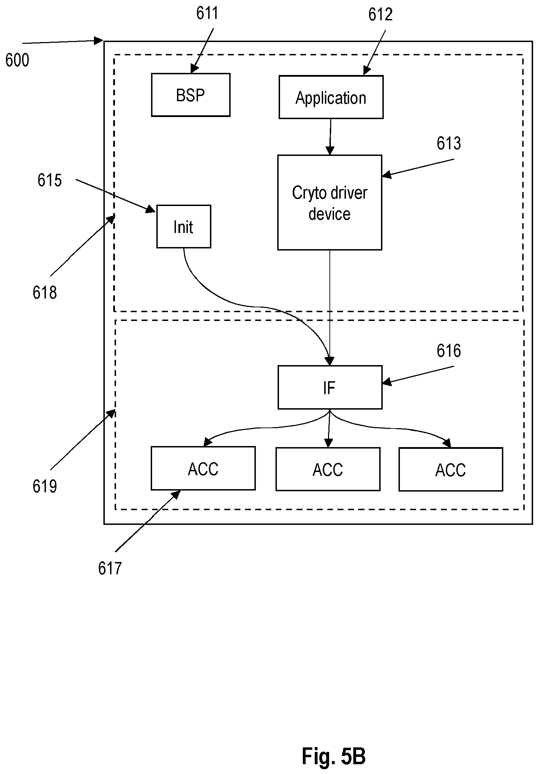

The Hardware Security Module (HSM) of Fig. 3 comprises a Field Programmable Gate Array (FPGA) 401. This is preferably a System-on-chip FPGA (SoC FPGA) as described below with reference to Fig. 5A and Fig. 5B, although implementations are possible in which the FPGA is a non-SoC FPGA, such as described below with reference to Fig. 4. The FPGA 401 is a single, discrete, self-contained package that implements various functionality performed by the processor 202 and the crypto-coprocessor 204 as described in relation to Fig. 1. (Alternatively, this functionally may be provided by the FPGA 401 in combination with a separate non-programmable processor (not shown)). The FPGA 401 does this by interacting with the non-volatile storage 208 and the RAM 209. The non-volatile storage 208, the RAM 209, and the at least one processor are each implemented as discrete, individually-packaged, components.

A SoC FPGA is an integrated circuit comprising a fixed Central Processing Unit and an array of programmable logic blocks and a hierarchy of reconfigurable interconnects that allow blocks to be wired together in order to implement a user specified functionality. A non-SoC FPGA does not include a CPU. Unlike a conventional Central Processing Unit, an FPGA can be configured after its manufacture. A manufacturing step defines the fixed logic that is present in the FPGA, including the programmable logic blocks, the presence of any specific Digital Signal Processing or Memory blocks etc.. However, the functionality implemented by the FPGA is then defined at a later stage when the interconnections between the various blocks are formed.

Fig. 4 shows a schematic illustration of an example non-SoC Field Programmable Gate Array (FPGA), which can be included in a HSM device of one of the examples above, or according to one of the embodiments described below. For example, the FPGA 401 included in the HSM of Fig. 3A may comprise an FPGA as shown in Fig. 4.

Fig. 4 shows an FPGA 500 comprising a plurality of Input/Output (I/O) interfaces 501, a plurality of functional blocks 502, 503, 504. In an example, these could be implemented as Configurable Logic Blocks (CLB) 502, a plurality of memory blocks 503, and a plurality of Digital Signal Processing (DSP) blocks 504, connected by a wiring network 505. The wiring network 505 comprises a plurality of vertical and horizontal channels communicatively coupled to the Input/Output (I/O) interfaces 501, the Configurable Logic Blocks (CLB) 502, the memory blocks 503, and the Digital Signal Processing (DSP) blocks 504, thereby forming a communication bus to which each of the blocks are connected and through which each of the blocks can communicate.

The wiring network 505 also comprises a plurality of switch blocks at the intersection of vertical and horizontal channels. The switch blocks programmably route connections, i.e. can be programmed to form a connection, from a source to a destination (a 1 to 1 connection) or from a source to a plurality of destinations (a 1 to many connection), thereby forming a connection between the different blocks of the FPGA 500. The FPGA architecture shown in Fig. 4 is known as an island-style architecture because it comprises a two-dimensional array of blocks comprising configurable logic blocks, memory blocks and DSP blocks (i.e. the islands) within a sea of routing interconnections. Other FPGA architectures can alternatively be used.

A Configurable Logic Block (CLB) 502 comprises a programmable Look Up Table (LUT) and register. A Look Up Table (LUT) comprises an array of data which maps input values to output values.

A memory block 503 comprises Random Access Memory (RAM) that is used by the configurable logic of the FPGA.

A Digital Signal Processing (DSP) block 504 comprises dedicated logic circuits (i.e. fixed circuits) for performing digital signal processing operations.

An Input/Output (I/O) interface 501 comprises an interface through which information can be received into the FPGA 500 and through which information can be transmitted out of the FPGA 500. Optionally each Input/Output interface 501 is associated with a pin of the FPGA package i.e. a metal connection to which a wire or a trace on the PCB 200, such as electrically conductive connection 210, can be connected. Optionally the Input/Output (I/O) interface 501 supports various different signalling techniques including, but not limited to, Low Voltage CMOS signalling (LVCMOS), Low Voltage Differential Signalling (LVDS) and/or Stub Series Terminated Logic (SSTL).

The process of configuring the FPGA to implement the desired logic functions is referred to as the FPGA design flow. A first step of the FPGA design flow is design entry. In this step a user generates a description of the hardware circuit that the FPGA is to implement. The description may take the form of a schematic. Alternatively, and more likely for complicated designs, the hardware circuit may be described using a Hardware Description Language (HDL) such as VHDL (Very high speed integrated circuit Hardware Description Language).

A second step of the FPGA design flow is synthesis. During synthesis the high-level hardware description of the circuit, which may be in the form of a Hardware Description Language, is converted to a hardware architecture (i.e. a gate-level circuit) that uses the primitives of the specific FPGA, i.e. the smallest atomic logic elements of the FPGA like flip-flops, multiplexers, block RAM etc.. The output of synthesis is a netlist, also referred to as an un-routed netlist or a post-synthesis netlist, comprising an indication of the FPGA elements used to implement the hardware circuit and an indication of the interconnections between these elements.

A third step of the FPGA design flow is place and route. During place and route the netlist (generated in step 2) is analysed and mapped to a specific physical hardware resource in the FPGA (place), the elements are then interconnected (route) to form the functionality of the hardware circuit (specified in step 1). The place and route step can be subject to a number of constraints. For example, a user can specify timing constraints to ensure logic elements will comply with timing requirements, for example a synchronous circuit being able to process data accurately at a specified clock rate. Alternately or additionally, the location of design elements can be constrained to specific areas of the FPGA die, known as location constraints.

The output of place and route is a FPGA bitstream, also referred to as a bit file. The FPGA bit stream comprises programming information that is used by the FPGA to implement the hardware circuit, i.e. implementing the functionality specified in step 1, using physical FPGA resources, according to the user constraints regarding timing/placement etc. of step 3.

The FPGA uses the bit file to configure all of the necessary areas of the FPGA in order to implement the designed functionality. This includes but is not limited to routing between each configurable logic block, configuration of each logic block, memory contents, connections to IO and configuration of pins.

Fig. 5A shows a schematic illustration of a SoC Field Programmable Gate Array (FPGA), which may be included in a HSM device of Fig. 3 according to a variation. That is, the FPGA 401 included in the HSM of Fig. 3 may comprise an SOC FPGA as shown in Fig. 5A. A SOC FPGA integrates processor and FPGA architecture. An SOC FPGA is a device that comprises a System-on-a-Chip and programmable logic on the same device, thereby combining the high-level management functionality of a processor and the data processing capability of the configurable logic into a single device.

The SOC FPGA is logically divided into a processing system 600 and programmable logic 606.

The processing system 600 forms the System-on-a-Chip (SoC), and comprises an Input/Output (I/O) interface 601, processor(s) 602 such as a single (e.g. 4 core) processor, on-chip Read Only Memory (ROM) 604, on-chip Random Access Memory (RAM) 603 and external memory controller 605. Other capabilities may also be provided. The Input/Output (I/O) interface 601 is communicatively coupled to processor 602. In one example the processor 602 may be an ARM^{®} Cortex-A53. The processor 602 is coupled to on-chip Read Only Memory (ROM) 604, and on-chip Random Access Memory (RAM) 603. The processor 602 is also coupled to external memory controller 605 configured to communicate via Input/Output (I/O) interface 601 with off-chip memory, which includes the HSM non-volatile storage 208 and RAM 209.

The processing system 600 is configured to execute program instructions retrieved from memory, for example boot instructions retrieved from the on-chip ROM 604 and application instructions retrieved from the non-volatile memory 208, such as Flash memory.

The processor 602 is configured to communicate with programmable logic 606 via an interconnect, for example a bus. In one example, the interconnect is an ARM AMBA^{®} AXI based interface. In this way, the software being executed by the processor 602 can interact with the programmable logic 606, for example to obtain a value calculated by the programmable logic 606, start a hardware operation etc..

The programmable logic 606 comprises Configurable Logic Blocks (CLBs), Digital Signal Processing (DSP) blocks, and memory blocks as described in relation to Fig. 4. The FPGA also comprises Input/Output (I/O) interface 501 similar to those described in relation to Fig. 4 that are communicatively coupled to the programmable logic 606. A bit file for the programmable logic 606, including instructions on how to configure the programmable logic to perform the desired functionality, can be generated in the same way as discussed in relation to Fig. 4 and stored in the non-volatile memory 208 of the HSM.

In the HSM illustrated in Fig. 3, various functionality of the processor 202 and the crypto co-processor 204 described in relation to Fig. 1 is implemented by the FPGA 401, in the following manner. In the example described below, the FPGA 401 is a SOC FPGA such as described in relation to Fig. 5A. However, alternatively the FPGA 401 may be an FPGA such as described in relation to Fig. 4.

As described in relation to Fig. 1, the application computer program code is stored in the non-volatile memory 208 of the HSM. The processing system 600 of the FPGA 401 is configured to execute the application, which may be loaded directly into the SoC RAM 603 and/or via the RAM 209. Also stored in the non-volatile memory 208 on the HSM are any components necessary to execute the application, including runtime system files. When executed, a copy of the application machine code is loaded into the processing system 600. Execution of the application by the processing system 600 causes various functionality of a Hardware Security Module (HSM), such as generating cryptographic keys, storing cryptographic keys, or performing cryptographic operations etc., to be implemented.

Additionally the FPGA 401 is configured to perform, using the configurable logic 606, various cryptographic functions in hardware, for example various standard encryption and decryption algorithms, and digital signature algorithms. For example, the FPGA 401 is configured to provide at least one of: a public key hardware accelerator (PKSA), a random number generator, an advanced encryption standard accelerator (AESA) and a message digest hardware accelerator (MDHA). In the FPGA 401, one or more of these operations are implemented directly in hardware.

The programmable logic 606 is configured to receive requests to perform one or more of these operations from the processing system 600 and to return to the processing system 600 the output of the operation. The processing system 600 is configured to off-load various operations to the programmable logic 606. The programmable logic 606 is configured to perform certain operations in hardware, meaning that these operations may be performed more efficiently on the programmable logic 606 than on the processing system 600.

Fig. 5B shows a schematic illustration of an SOC FPGA in which various functionality is implemented. The FPGA is a SOC FPGA such as described in relation to Fig. 5A. The dashed line shows a logical split between functionality performed by the processing system 600 and the programmable logic 606.

As described previously, the application computer program code is stored in the non-volatile memory 208 of the HSM. When executed, a copy of the application machine code is loaded into the processing system 600, where the application 612 is represented as a software product, or process, in the working memory of the processing system 600.

The application process 612 calls a crypto device driver module 613 when certain cryptographic operations are to be performed. Computer program code corresponding to the crypto device driver module is stored in the non-volatile memory 208 of the HSM, and is retrieved by the application. When executed, a copy of the program code is loaded into the processing system 600, as a software product, or process, in the working memory of the processing system 600. The crypto device driver module 613 implements a driver process which coordinates data transfer to and from the FPGA, and provides an initialization process "Init" 615 which is configured to initialise other components of the hardware of the HSM which the crypto device driver 613 is driving, such as the components implemented in programmable logic.

The driver 613 is configured to access the interface between the processor 602 and the programmable logic 606. The processor 602 is configured to off-load various operations to the programmable logic 606. The programmable logic 606 is configured to perform certain operations in hardware, meaning that these operations may be performed more efficiently than on the processor 602. The application process 612 calls the crypto device driver module 613. The driver module 613 sends a request to perform the operation to the programmable logic 606. The programmable logic 606 has hardware implementations of one or more cryptographic operations.

A board support package (BSP) process 611, such as a Linux BSP, also runs on the processing system 600.

An optional IF (interface) component 616 is implemented in the programmable logic, the IF component 616 is configured to access, and balance the load across, a plurality of acceleration cores ACC 617. Each ACC corresponds to a section of the FPGA hardware which is configured to implement one or more cryptographic functions. Each core is typically identical. It may correspond to a cryptographic function, implemented in hardware, e.g. a symmetric security algorithm.

In this example, the FPGA is a SOC FPGA as shown in Fig. 5A. As described, various functionality performed by the processor 202 in the device of Fig. 1 is performed by the processor 602 of the SOC FPGA. Various functionality performed by the crypto coprocessor in the device of Fig. 1 is performed by the programmable logic 606 of the SOC FPGA.

In the case where the FPGA is implemented using an FPGA as shown in Fig. 4, the functionality performed by the processor 202 in the device of Fig. 1 is implemented by a soft processor, also referred to as a soft-core processor, which is a processor implemented using the programmable logic resources of the FPGA.

By implementing various functionality of the crypto co-processor 204 of the device of Fig. 1 in an FPGA, the HSM device is made reconfigurable. The FPGA can be reconfigured to implement a more secure version of an operation implemented in hardware for example.

The FPGA may be further configured to store, and when appropriate output, an ID for the HSM, which can be used for interactions between the manufacturer of the HSM and an owner of the HSM (for example, for trouble-shooting or operating a warranty). Furthermore, the function performed by the FPGA may be made device-specific, e.g. by arranging it to depend upon the ID and/or physically uncloneable functions ("pufs"). Tampering with the HSM would change what the output will be, since this cannot be deduced from the SP and FPGA as fabricated.

In another option, the FPGA may be configured to provide a security monitor block, which monitors changes to the logic blocks 502, and provides a security option (e.g. generate a warning or limit the operations performed by the HSM) when such a change is observed, and thereby protects the HSM against reconfiguration. Furthermore, the FPGA may be configured (e.g. at intervals) to read the status of each logic block 502, and verify that it is as expected. This makes it harder for an intruder to maliciously switch the logic blocks. Furthermore, the FPGA may provide a short-term RAM function, e.g. backed by the battery of the HSM. Further technical advantages may be provided by an appropriate choice of the FPGA, for example if the FPGA is implemented as a Zynq^{®} Ultrascale+TM device, this device provides the advantages explained in technical document XAPP1323 describing that device.

As will be apparent from the examples provided below, using a FPGA (comprising configurable logic) to implement the functionality of the processor 202 of Fig. 1 provides a Hardware Security Module (HSM) that is more robust to micro-architecture attacks (making the HSM more secure in general) than the HSM of Fig. 1, while also providing the ability to restore a high level of security to the system in response to identifying a micro architecture attack vulnerability thereby allowing the HSM to be used for longer at a high level of security (i.e. without being vulnerable to the identified microarchitecture attack).

In the following examples reference will be made to a "hard-core" processor and a "softcore" processor. A "soft-core" processor (also referred to as a soft processor) is a processor that is reconfigurable, e.g. based on received reconfiguration instructions. The "soft-core" process is implemented in the programmable logic resources available in the FPGA (i.e. using the Configurable Logic Blocks (CLBs), Block RAMS's and the Digital Signal Processing (DSP) components of the FPGA).

In contrast a "hard-core" processor (also referred to as a hard processor) is a processor that is implemented in silicon (or other semiconductor), such that the logical operations performed by logic blocks of the processor are determined by the fabrication process of the processor (i.e. where the components of a processor such as the control unit, the arithmetic unit and the memory unit, are implemented in a fixed way). As a result, the implementation of the "hard-core" is fixed after manufacture and is not re-configurable like the "soft-core" processor.

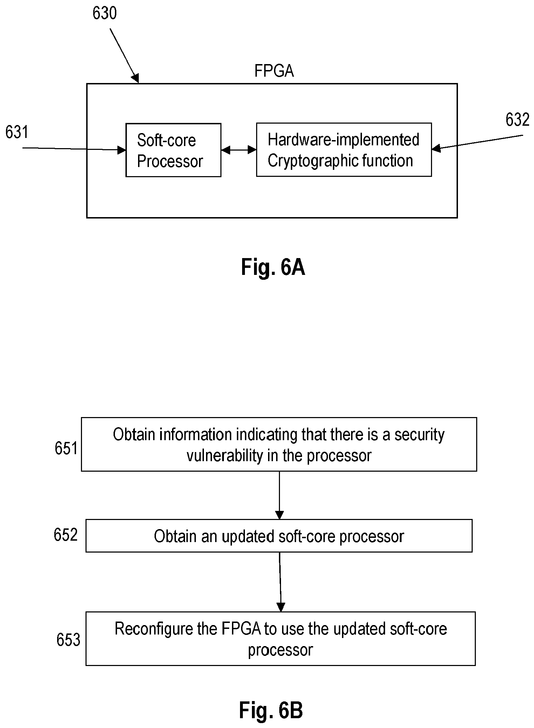

Fig. 6A shows a logical diagram of an FPGA in a HSM according to a first example embodiment. In particular Fig. 6A shows a Field Programmable Gate Array (FPGA) 630 comprising a soft-core processor 631. Optionally the FPGA 630 also comprises at least one hardware-implemented cryptographic function 632 that is communicatively coupled to the soft-core processor 631. In the example of Fig. 6A, the FPGA 630 may be an FPGA as discussed in relation to Fig. 4, or a FPGA (comprising a System-On-a-Chip (SoC) and programmable logic) as discussed in relation to Fig. 5A.

The soft-core processor 631 is implemented in the programmable logic of the FPGA 600 and is configured to execute program code to perform the functionality of a Hardware Security Module (HSM) as described in relation to Fig. 1 (e.g. generate cryptographic keys, store cryptographic keys, perform cryptographic operations etc.). Although not shown, it will be appreciated that the soft-core processor is communicatively coupled to the input/output modules of the FPGA for communication with external processes, components, or users.

The hardware-implemented cryptographic function 632 comprises cryptographic function(s) implemented by specifically configuring the configurable logic of the FPGA to perform the function. In an example the cryptographic operation comprise at least one of: a public key hardware accelerator (PKSA), a random number generator, an advanced encryption standard accelerator (AESA) and a message digest hardware accelerator (MDHA). Implementing the at least one cryptographic function in hardware (i.e. using the configurable logic resources of the FPGA) enables the functions to be accelerated by leveraging the ability to implement operations in parallel using the logic resources.

In the example of Fig. 6A the processor used to execute the program code of the HSM is a "soft-core" processor (i.e. implemented in the configurable logic of the FPGA). Consequently, if it is determined that the version of the processor being used in the FPGA 630 is vulnerable to a micro architectural attack, then a new version of the processor core is developed (that does not contain this vulnerability) and the FPGA is subsequently reconfigured to use the new version of the processor that does not include the security vulnerability.

As a result, the security of the Hardware Security Module (HSM) and the information it uses (e.g. cryptographic keys) is maintained and the life-span of the HSM is extended since the HSM is no longer becomes obsolete due to the identified security vulnerability.

Fig. 6B shows a method of removing a security vulnerability in a HSM according to an example. In step 651 information is obtained indicating that there is a security vulnerability with the processor used in the Hardware Security Module (HSM). Optionally the security vulnerability is due to the existence of a newly disclosed microarchitecture attack. In an example the information obtained in step 651 is obtained from a manufacturer of the soft-core processor.

In step 652 an updated soft-core processor is obtained. In an example an updated softcore processor that removes the vulnerability identified in step 651 is obtained by modifying a hardware description of the processor. In another example an updated softcore processor is obtained by receiving a gate-level netlist (i.e. a list of logic gates and associated interconnections that make up the circuit) from a third party (optionally from the same third party who designed the soft-core processor), where the gate level netlist was generated by synthesising a hardware description of the updated processor.

In an example, if the current "soft-core processor" implements a branch predictor, it may be determined that a vulnerability to a Spectre attack exists due to the branch predictor. For example, for an application which causes unencrypted keys to be generated following an authentication procedure, such an a procedure in which a user of the HSM is required to authenticate their identity by providing a secure smart card to be read by a smart card reader of the HSM (not shown in Fig. 3), the branch predictor may, before the authentication procedure is successfully completed, cause a speculative execution of a process which decrypts one or more of the cryptographic keys and stores them, e.g. in a cache memory of the FPGA 630. If the authentication fails, the decrypted keys may remain in the cache memory, and a malicious third party may be able to extract them or cause the HSM to make use of them, thus creating a vulnerability. In this case, the updated soft-core processor may omit branch predictor, thereby eliminating the Spectre attack vulnerability. Alternatively, for example if the presence of the branch predictor is particularly valuable during normal operation of the HSM, the branch predictor may be modified in some way to remove the vulnerability, e.g. by reconfiguring the branch predictor to perform a cache erase at certain times (e.g. when a certain erasure criterion is met, such as an authentication operation failing, or at least not being successfully completed within a certain time threshold after the generation of the unencrypted keys), to remove sensitive data within the cache.

In step 653 the FPGA 630 is reconfigured to use the updated soft-core processor. In one example reconfiguring the FPGA 630 to use the updated soft-core processor comprises generating a bit file comprising the updated soft-core processor by completing the FPGA design flow discussed above (i.e. by synthesising, place and routing etc.) with a hardware description comprising the updated soft-core processor and (where present) the hardware-implemented cryptographic functions 632.

The updated bit file is then uploaded to the FPGA 630, either using a JTAG programming interface, or uploading the updated bit file to memory and rebooting the FPGA 630 (i.e. turning the power to the FPGA 630 on and off) during which time the FPGA 630 reads the contents of the memory to identify a bit file for configuring the configurable logic. The process of reconfiguring the FPGA 630 by resetting and uploading a complete updated bit file is referred to as static reconfiguration. For example, the reconfigured bit file may be loaded onto the non-volatile storage 208, e.g. via the Input/Output (IO) connector 201 or by replacing the non-volatile storage 208 with a replacement non-volatile storage 208 which stores the reconfigured bit file, and the FPGA 630 may load the reconfigured bit file from the non-volatile storage 208 during the rebooting.

In another example the FPGA 630 is reconfigured dynamically (referred to as dynamic reconfiguration or partial reconfiguration). In general, dynamic reconfiguration refers to the ability to modify blocks of programmable logic by loading partial bit files to the FPGA while the remaining logic (i.e. the static logic that is unchanged) continues to operate without interruption, thereby avoiding the need to reboot the FPGA 630.

In brief, dynamic reconfiguration techniques involve designating portion(s) of the FPGA 630 to be reconfigurable and building a partial bit file for the portion of the FPGA 630 that is to be reconfigured. In an example, the soft-core processor 631 is designed to occupy a reconfigurable region and reconfiguring the FPGA 630 comprises: generating a partial bit file for the reconfigurable region based on the updated soft-core processor generated in step 652, transmitting the partial bit file to the FPGA 630, and causing the FPGA 300 to reconfigure the designated portion(s) according to the partial bit file, thereby implementing an updated version of the soft-core processor (i.e. without the security vulnerability) without having to power down the Hardware Security Module. In an example the static portions of the FPGA 630 design comprise the hardware-implemented cryptographic function 632.

As discussed above, by using an FPGA to implement a soft-core processor the Hardware Security Module (HSM) is more resilient to micro architecture attacks since the soft-core processor can be easily updated with a "fix" once the attack has been identified. Furthermore, these vulnerabilities can be fixed when the Hardware Security Module (HSM) is deployed, thereby prolonging the life span of the HSM.

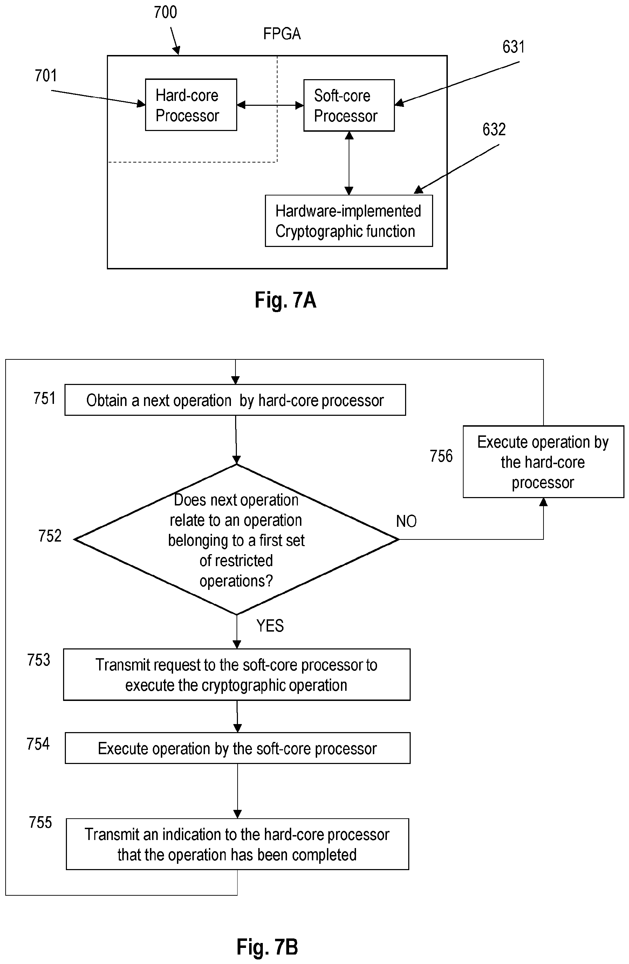

Fig. 7A shows a logical diagram of an FPGA in a HSM according to a second example embodiment. In Fig. 7A the same reference numerals as Fig. 6A are used to denote same components. Fig. 7A shows a Field Programmable Gate Array (FPGA) 700 comprising a control processor 701 (which may be a hard-core processor, as illustrated) and a soft-core processor 631. Optionally the hard-core processor 701 is a Commercial Off-The-Shelf (COTS) processor such as an ARM^{®} Cortex-A53 (or -A9) Based Application Processor Unit. Optionally the FPGA 700 also comprises at least one hardware-implemented cryptographic function 632 that is communicatively coupled to the soft-core processor 631. Note that in some embodiments, the control processor 701 may alternatively be a soft-core CPU, rather than a hard-core processor, although this is typically not derivable.

In the example of Fig. 7A, the FPGA 700 may be a SoC FPGA (comprising a System-On-a-Chip (SoC) and programmable logic) as discussed in relation to Fig. 5A. Consequently, in Fig. 7A the dashed line indicates a (logical) partition between the "fixed" circuitry of the System-On-a-Chip (SoC) and the programmable logic of the FPGA (that can be configured according to a user generated bit file).

In the example of Fig. 7A the FPGA 700 comprises a hard-core processor 701 (i.e. a processor that is implemented in silicon, where the components of a processor such as the control unit, the arithmetic unit and the memory unit are implemented in a fixed way; for example, the hard core processor may be implemented by the processor 602 of Fig. 5A). The hard-core processor 701 is configured to execute program code that implements at least a part of the Hardware Security Module (HSM) functionality discussed in relation to Fig. 1.

Although the hard-core processor 701 is not reconfigurable, it does have some advantages. For example, the hard-core processor may have a faster processing speed (i.e. clock rate) since it is specifically adapted for high-speed operations. Furthermore, the hard-core processor 701 may be able to support a larger instruction set than a softcore processor and/or more advanced features (e.g. the use of caching etc.).

In the example of Fig. 7A the processing of the HSM functionality is split between the hard-core processor 701 and the soft-core processor 631. In particular, security critical operations (i.e. operations that retrieve, use or generate cryptographic keys) are executed by the soft-core processor 631, while other operations (i.e. operations that are not security critical) are executed by the hard-core processor 701.

In this case a security vulnerability in the hard-core processor 701 has a limited effect on the security of the Hardware Security Module (HSM) because all of the processing of security critical data is performed by the soft-core processor 631 which, as discussed in relation to Fig. 6A and Fig. 6B, can be updated to fix the security vulnerability. However, by using the hard-core processor 701 to perform other (not security critical) operations, the processing speed can be improved.

In response to identifying a security vulnerability in the soft-core processor 631, the softcore processor 631 is updated (to remove the security vulnerability) and the FPGA 600 is reconfigured to use the updated version as described in relation to Fig. 6B. Thus, continuing the example explained above, if the security vulnerability is due to a branch predictor which is part of a current soft-core processor 631, the FPGA 700 may be receive instructions (e.g. by the method discussed above in relation to Fig. 6A) to reconfigure the soft-core processor 631, to be an updated soft-core processor which omits the branch processor or in which the operation of the branch processor is modified, e.g. to perform a cache erase, if the erasure criterion is met.

Fig. 7B shows a method performed by the FPGA 700 in a HSM according to the second example embodiment. The method begins in step 751 by the hard-core processor 701 obtaining a next data-processing operation in the program code. The operation may be a set of multiple instructions. It may for example be a cryptographic operation.

In step 752 the hard-core processor 701 determines whether the next operation is an operation belonging to a first set of restricted operations. In particular, the hard-core processor 701 determines whether the next operation is a cryptographic operation (i.e. an operation/function that retrieves, uses or generates a cryptographic key).

If the next operation is an operation in the restricted set of operations, the method proceeds to step 753. In step 753 the hard-core processor 701 transmits a request to the soft-core processor 631 to execute the operation (belonging to the first set of restricted operations). The soft-core processor 631 subsequently receives the request.

In step 754 the soft-core processor 631 executes the operation received in the request. The method then proceeds to step 755.

In step 755 the soft-core processor 631 transmits an indication to the hard-core processor 701 that the requested operation from step 753 has been executed. In response to receiving the indication, the hard-core processor 701 proceeds step 751 where the hard-core processor 701 obtains the next operation.

Returning to step 752, if in step 752 it is determined that the next operation does not relate to an operation belonging to a first set of restricted operations then the method proceeds to step 756. In step 756 the hard-core processor 701 executes the operation. The method subsequently proceeds to step 751 where a next operation is obtained by the hard-core processor 701.

In an example, the request transmitted to the soft-core processor 631 in step 753 comprises data to be encrypted. The soft-core processor 631 retrieves a cryptographic key and encrypts the data in step 754 and the soft-core processor 631 subsequently transmits the encrypted data in the indication transmitted in step 755.

Advantageously, the architecture shown in Fig. 7A uses the hard-core processor 701 to execute un-restricted operations (thereby improving processing speeds) while using the soft-core processor 631 to execute restricted operations. As a result, if a security vulnerability is present in the hard-core processor 701, and cannot be fixed, this does not compromise the security of the Hardware Security Module (HSM) because operations relating to the cryptographic keys are performed by the soft-core processor 631. Furthermore, in the case of a security vulnerability being present in the soft-core processor 631, the soft-core processor 631 can be updated (to remove the vulnerability) and the FPGA can be re-configured to implement the updated soft-core processor 631. Thereby maintaining a high level of security and prolonging the life of the HSM.

In principle, a vulnerability may be discovered by a malicious third-party which is not yet known to the provider of the HSM. For that reason, the provider of the HSM may at intervals update the soft-core processor to a new version (e.g. an extensively redesigned version) so that any information which a malicious third-party may have obtained about the previous version of the soft-core processor (e.g. relating to vulnerabilities of the previous version of the soft-core processor) is obsolete.

The Hardware Security Module (HSM) discussed above may be used by multiple different users. This is referred to as multi-tenancy, where each tenant is a user of the Hardware Security Module (HSM). An example use case of a multi-tenancy system is where the Hardware Security Module (HSM) is deployed in a cloud deployment where the functionality of the HSM can be accessed on demand by end users or consumers.

Multi-tenancy can represent a challenge from a security perspective. For example, in the case where a single processor is used, the Hardware Security Module (HSM) processes sensitive data (e.g. cryptographic keys) from multiple different users using the same processor. Consequently, the potential for a security vulnerability is increased because multiple users (who do not consent to their sensitive information being shared) are using a shared set of resources. As a result, a legitimate (but malicious) user of the Hardware Security Module (HSM) could execute program code to exploit a vulnerability in the processor (e.g. a microarchitecture attack) that enables the user to access the sensitive information (e.g. the cryptographic keys) of another user/tenant of the HSM.

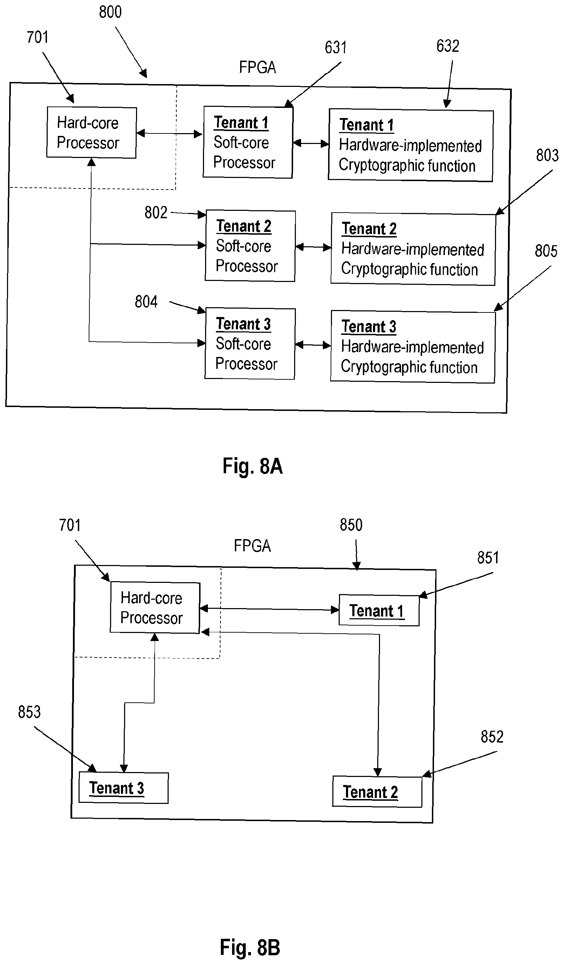

If the softcore CPU is restricted to trusted software, the multi-tenancy separation requirements may be met, e.g. with a single soft-core processor. However, other use cases have different requirements. For example, Fig. 8A shows a logical diagram of an FPGA in a multi-tenant HSM according to a third example embodiment. In Fig. 8A same reference numerals as Fig. 7A are used to denote same components. In particular, Fig. 8A shows a FPGA 800 comprising a control processor 701 (desirably, but not necessarily, a hard-core processor, as illustrated), a soft-core processor 631 (associated with a first tenant), a second soft-core processor 802 (associated with a second tenant), and a third soft-core processor 804 (associated with a third tenant). Each of the soft-core processor 631, the second soft-core processor 802 and the third soft-core processor 804 are implemented in the programmable logic of the FPGA and communicatively coupled to the hard-core processor 701.

Optionally, the soft-core processor 701 (associated with the first tenant), is communicatively coupled to a hardware-implemented cryptographic function 632, the second soft-core processor 802 (associated with the second tenant), is communicatively coupled to a second hardware-implemented cryptographic function 803, and the third soft-core processor 804 (associated with the third tenant), is communicatively coupled to a third hardware-implemented cryptographic function 805. Each of the first, second and third hardware-implemented cryptographic functions are implemented in the programmable logic of the FPGA 800.

In the following example, three tenants discussed. However, it is emphasized, for the avoidance of any doubt that the techniques described below extend to any number of tenants greater than one.

In a first example embodiment, the hard-core processor 701 is configured to execute program code associated with each of the tenants. For example, the hard-core processor 701 is configured to execute a first thread (defined by a first program associated with a first tenant), a second thread (defined by a second program associated with a second tenant), and a third thread (defined by a third program associated with a third tenant). Here a thread (also referred to as a CPU thread) is a sequence of programmed instructions, defining a sequence of operations (where each operation may correspond to a respective sequence of multiple ones of the instructions). Thus, the first thread is associated with the first tenant, the second thread is associated with the second tenant, and the third thread is associated with the third tenant. Thus, the soft-core processor 632 is (only) used for executing operations with the first tenant; the second soft-core processor 802 is used (only) for executing operations associated with the second tenant; and the third soft-core processor 804 is used (only) for executing operations associated with the second tenant.

In the first example, the hard-core processor 701 is configured to perform the method of Fig. 7B for each thread. That is to say, for a first thread the hard-core processor 701 retrieves a next operation and determines whether the operation is an operation in a set of restricted operations. If it is determined that the next operation (of the first thread) does relate to a restricted operation then a request is transmitted to the soft-core-processor 631 to perform the operation as discussed above. In this example, the soft-core processors implemented in the FPGA configurable logic are uniquely associated with a tenant (i.e. each tenant has a single unique soft-core processor for executing operations which are restricted operations).

In the case where the hard-core processor 701 is a single-cored processor, at times when the FPGA 700 is executing the second thread, the first thread will be suspended from execution and the second thread (associated with the second tenant) will be executed by the processor 701. The processor 701 performs the method of Fig. 7B. However, in this case, if it is determined that a next operation of the second thread is an operation in the set of restricted operations, the hard-core processor transmits the request to execute the restricted operation to the second soft-core processor 802, since it is the second soft-core processor 802 that is uniquely associated with the second tenant.

A similar approach is followed when the hard-core processor executes a third thread (associated with a third tenant). In this case operations that from the restricted set of operations are transmitted to the third soft-core processor 804. Since it is the third softcore processor 804 that is uniquely associated with the third tenant.

In another example, the hard-core processor 701 is a multi-core processor wherein each tenant is associated with a different core, and operations from different ones of the threads which do not relate to restricted operations can be implemented simultaneously on the corresponding cores. When, for one of the threads, the next operation for the respective core (associated with a corresponding tenant) is a restricted operation, the core transmits a request to the soft-core processor uniquely associated with the same tenant to perform the restricted operation.

By virtue of using an FPGA 800 with configurable logic to implement the Hardware Security Module (HSM) it is possible to implement a soft-core processor for each tenant. As a result, the restricted operations associated with each tenant's data are performed in isolation, thereby reducing the risk that a tenant of the Hardware Security Module (HSM) is able to gain unauthorised access to the secret information (e.g. cryptographic keys) associated with another tenant of the multi-tenant system. As a result, the implementation shown in Fig. 8A provides a more secure multi-tenant Hardware Security Module (HSM).

In the examples discussed above, the Hard-core processor 701 is configured to execute operations for each of the tenants that are not restricted operations.

In another example, the hard-core processor 701 is configured to transmit all operations being executed for a tenant (i.e. whether they relate to a restricted operation or not) to the soft-core processor associated with that tenant, thereby further improving isolation between tenants.

Fig. 8B schematically shows a placement of components in a FPGA of a multi-tenant HSM according to the third example embodiment. Fig. 8B shows an FPGA 850 comprising a hard-core processor 701, a first portion of configurable logic associated with the first tenant 851, a second portion of configurable logic associated with the second tenant 852, and a third portion of configurable logic associated with the third tenant 853. The first, second and third portions of the configurable logic are different, and they may be non-overlapping, and optionally mutually spaced apart.

The first portion of configurable logic associated with the first tenant 851 comprises the programmable logic (e.g. the Configurable Logic Blocks, the Digital Signal Processing Blocks, the Block RAM) required to implement the soft-core processor 601 and, where present, the hardware-implemented cryptographic function 602.

Likewise, the second portion of configurable logic associated with the second tenant 852 comprises the programmable logic (e.g. the Configurable Logic Blocks, the Digital Signal Processing Blocks, the Block RAM) required to implement the second soft-core processor 802 and, where present, the second hardware-implemented cryptographic function 803. Similarly, the third portion of configurable logic associated with the third tenant 853 comprises the programmable logic (e.g. the Configurable Logic Blocks, the Digital Signal Processing Blocks, the Block RAM) required to implement the third softcore processor 804 and, where present, the third hardware-implemented cryptographic function 805.

As discussed above, in relation to Fig. 4, during the FPGA design flow, when generating a bit file (comprising information indicating a configuration of the programmable logic that implements the functionality of the specified circuit), it is possible to specify constraints on where the synthesized logic is to be placed within the FPGA (i.e. which portions of the configurable logic are selected to implement the first, second and third soft-cores).

In an example the location of the first, second and third portions of configurable logic are constrained to specific areas of the FPGA die by using a constraints file and generating a bit file, according to the FPGA design flow discussed above, where place and route is based on the constraints file.

In particular, in one example the design can specify that the first, second and third portions of configurable logic are to be placed (within the FPGA resources) as far apart as possible (e.g. at opposite corners of the FPGA die), or at a position that maximises (across the whole implementation) a distance between the portions of configurable logic. This reduces the risk that the security of one of the soft-cores is compromised if the security of one of the other soft-cores is compromised, thereby leading to a more secure implementation of a multi-tenant Hardware Security Module (HSM).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A Hardware Security Module comprising a Field Programmable Gate Array, FPGA, which comprises:
a soft-core processor for executing program code implemented in a section of programmable logic; and
a control processor that is communicatively coupled to the soft-core processor;
wherein the control processor is configured to:
obtain a program operation;
determine whether the program operation is in a first set of restricted operations; and
in response to determining that the program operation is in the first set of restricted operations, transmit a request to perform the program operation to the softcore processor.

2. The Hardware Security Module according to claim 1, wherein the FPGA comprises a System-On-a-Chip, wherein the System-On-a-Chip comprises the control processor.

3. The Hardware Security Module according to claim 1 or 2, wherein the soft-core processor is further configured to:
receive the request to perform the program operation;
execute the program operation; and
transmit a response to the control processor comprising information associated with the program operation.

4. The Hardware Security Module according to any of claims 1 to 3, wherein:
the Hardware Security Module is a multi-tenant hardware security module for use by a first tenant and a second tenant;
the FPGA is further configured, in use, to provide a second soft-core processor for executing program code; and wherein:
the control processor is further configured to:
obtain a first operation from a first program associated with the first tenant, and in response to determining that the first operation is an operation in the first set of restricted operations, transmit the request to perform the first operation to the soft-core processor; and
obtain a second operation from a second program associated with the second tenant, and in response to determining that the second operation is an operation in the first set of restricted operations, transmit the request to perform the second operation to the second soft-core processor;
whereby the soft-core processor is used for executing operations associated with the first tenant, and the second soft-core processor is used for executing operations associated with the second tenant.

5. The Hardware Security Module according to claim 4, wherein the FPGA is further configured to:
implement the soft-core processor by a first portion of the programmable logic of the FPGA; and
implement the second soft-core processor by a second portion in the programmable logic of the FPGA;
the first and second portions of the programmable logic of the FPGA being different.

6. The Hardware Security Module according to any preceding claim, wherein the FPGA is further configured to provide:
a hardware implemented cryptographic function communicatively coupled to the soft-core processor.

7. A method of updating the hardware security module of any preceding claim, the method comprising:
obtaining an indication that the soft-core processor comprises a security venerability;
generating an updated version of the soft-core processor; and
reconfiguring the FPGA to use the updated version of the soft-core processor.

8. The method according to claim 7, wherein:
generating the updated version of the soft-core processor comprises generating a bit file, the bit file comprising information for configuring the programmable logic in the FPGA, and wherein:
reconfiguring the FPGA comprises loading the bit file into the FPGA.

9. The method according to claim 7 wherein:
generating the updated version of the soft-core processor comprises generating a partial bit file for configuring a section of the configurable logic in FPGA associated with implementing the soft-core processor and wherein:
reconfiguring the FPGA comprises reconfiguring the section of the configurable logic associated with the soft-core processor according to the partial bit file.

10. The method according to any preceding claim in which the control processor is implemented as a hard-core processor.
